# EUROPEAN PATENT APPLICATION

(11) **EP 4 542 598 A1**
(43) Date of publication of application: **23.04.2025**
(21) Application number: 24190283.2
(22) Date of filing: 23.07.2024
(51) Int. Cl.: H01G 4/232, H01G 4/30

(54) **MULTILAYER ELECTRONIC COMPONENT**

(30) Priority: 18.10.2023 KR 20230139677
(71) Applicant: Samsung Electro-Mechanics Co., Ltd., Gyeonggi-do (KR)
(72) Inventor: Yoo, Jong Hoon, Suwon-si, Gyeonggi-do (KR); Lee, Ji Hyun, Suwon-si, Gyeonggi-do (KR); Yoo, Dong Geon, Suwon-si, Gyeonggi-do (KR); Cho, Eun Hye, Suwon-si, Gyeonggi-do (KR)
(74) Representative: Grünecker Patent- und Rechtsanwälte PartG mbB

(57) **Abstract**

A multilayer electronic component according to an embodiment of the present disclosure includes a body including a dielectric layer and an internal electrode; and an external electrode including an electrode layer disposed on the body and connected to the internal electrode, and a plating layer disposed on the electrode layer, wherein the electrode layer includes a connection electrode layer including copper (Cu) and glass, and a band electrode layer including silver (Ag) and glass, and the external electrode further includes a conductive resin layer disposed between the band electrode layer and the plating layer and including a conductive metal and a resin.

## Description

### CROSS-REFERENCE TO RELATED APPLICATION(S)

This application claims benefit of priority to Korean Patent Application No. 10-2023-0139677 filed on October 18, 2023 in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, may be a chip condenser mounted on the printed circuit boards of various types of electronic products such as image display devices including a liquid crystal display (LCD), a plasma display panel (PDP), or the like, a computer, a smartphone, a mobile phone, or the like, serving to charge or discharge electricity therein or therefrom.

Such a multilayer ceramic capacitor may be used as a component of various electronic devices, as the multilayer ceramic capacitor has a small size with high capacitance and is easily mounted. As various electronic devices such as computers, mobile devices, or the like have been miniaturized and implemented with high-output, demand for miniaturization and high capacitance of the multilayer ceramic capacitors has increased.

Recently, multilayer electronic components have been used in various environments, and research is being conducted to improve lifespan characteristics under harsh environments. In particular, the need for a robust design that is resistant to external shocks is increasing, and it is necessary to increase bending strength in such a robust design. To this end, epoxy may be added to an external electrode to improve bending strength characteristics. However, in the epoxy, since it is easy for external moisture to penetrate, which conflicts with the purpose of improving moisture resistance reliability, it is necessary to apply an appropriate structure and material to solve this problem.

### SUMMARY

An aspect of the present disclosure is to provide a multilayer electronic component having improved bending strength characteristics.

An aspect of the present disclosure is to provide a multilayer electronic component having improved moisture resistance reliability.

However, various problems to be solved by the present disclosure are not limited to the above-described contents, and can be more easily understood in a process of explaining specific embodiments of the present disclosure.

According to an aspect of the present disclosure, a multilayer electronic component includes a body including a dielectric layer and an internal electrode alternately disposed with the dielectric layer in a first direction, the body including a first surface and a second surface opposing each other in the first direction, a third surface and a fourth surface opposing each other in a second direction and connected to the first surface and the second surface, and a fifth surface and a sixth surface opposing each other in a third direction and connected to the first surface, the second surface, the third surface, and the fourth surface; and an external electrode including an electrode layer disposed on the body and connected to the internal electrode, a plating layer disposed on the electrode layer, and a conductive resin layer including a conductive metal and a resin, wherein the electrode layer includes a connection electrode layer disposed on the third surface and the fourth surface and including copper (Cu) and a first glass, and a band electrode layer contacting the connection electrode layer, disposed on a portion of the first surface and a portion of the second surface, and including silver (Ag) and a second glass, and the conductive resin layer is disposed between the band electrode layer and the plating layer.

According to another aspect of the present disclosure, a multilayer electronic component includes a body including a dielectric layer and an internal electrode alternately disposed with the dielectric layer in a first direction, the body including a first surface and a second surface opposing each other in the first direction, a third surface and a fourth surface opposing each other in a second direction and connected to the first surface and the second surface, and a fifth surface and a sixth surface opposing each other in a third direction and connected to the first surface, the second surface, the third surface, and the fourth surface; and an external electrode including an electrode layer disposed on the body and connected to the internal electrode, and a plating layer disposed on the electrode layer, and a conductive resin layer, wherein the electrode layer includes a connection electrode layer disposed on the third surface and the fourth surface and including a first conductive metal and a first glass, and a band electrode layer contacting the connection electrode layer, disposed on a portion of the first surface and a portion of the second surface, and including a second conductive metal and a second glass, and the conductive resin layer is disposed between the band electrode layer and the plating layer, and the conductive resin layer includes a third conductive metal and a resin.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 schematically illustrates a perspective view of a multilayer electronic component according to an embodiment of the present disclosure.
FIG. 2 schematically illustrates a cross-sectional view of FIG. 1, taken along line I-I'.
FIG. 3 schematically illustrates a cross-sectional view of FIG. 1, taken along line II-II'.
FIG. 4 schematically illustrates an enlarged view of portion M of FIG. 2.
FIG. 5 schematically illustrates a cross-sectional view of a multilayer electronic component according to another embodiment of the present disclosure, corresponding to a cross-section of FIG. 1, taken along line I-I'.

### DETAILED DESCRIPTION

Hereinafter, embodiments of the present disclosure will be described with reference to specific embodiments and the accompanying drawings. However, embodiments of the present disclosure may be modified into various other forms, and the scope of the present disclosure is not limited to the embodiments described below. Further, embodiments of the present disclosure may be provided for a more complete description of the present disclosure to the ordinary artisan. Therefore, shapes, sizes, and the like, of the elements in the drawings may be exaggerated for clarity of description, and the elements denoted by the same reference numerals in the drawings may be the same elements.

In addition, in order to clearly explain the present disclosure in the drawings, portions not related to the description will be omitted for clarification of the present disclosure, and a thickness may be enlarged to clearly illustrate layers and regions. The same reference numerals will be used to designate the same components in the same reference numerals. Further, throughout the specification, when an element is referred to as "comprising" or "including" an element, it means that the element may further include other elements as well, without departing from the other elements, unless specifically stated otherwise.

In the drawing, a first direction may be defined as a stack direction or a thickness T direction, a second direction may be defined as a length L direction, and a third direction may be defined as a width W direction.

### Multilayer Electronic Component

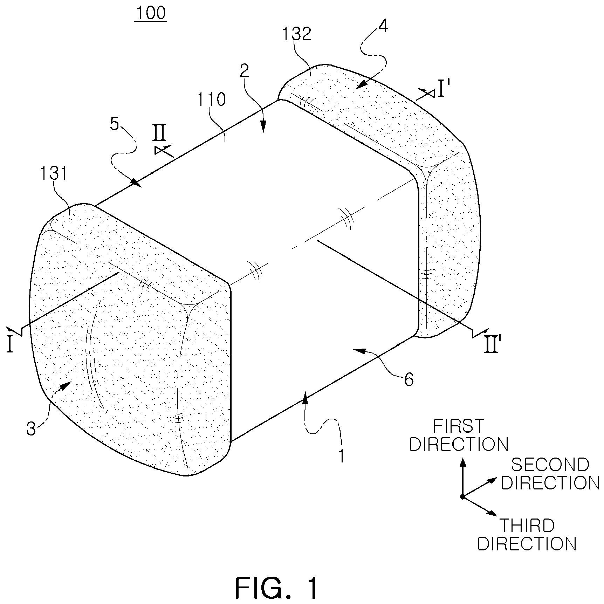

FIG. 1 schematically illustrates a perspective view of a multilayer electronic component according to an embodiment of the present disclosure.

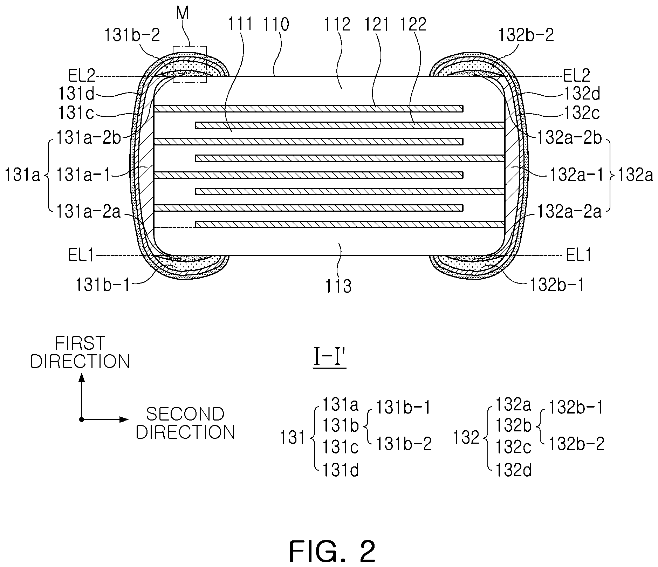

FIG. 2 schematically illustrates a cross-sectional view of FIG. 1, taken along line I-I'.

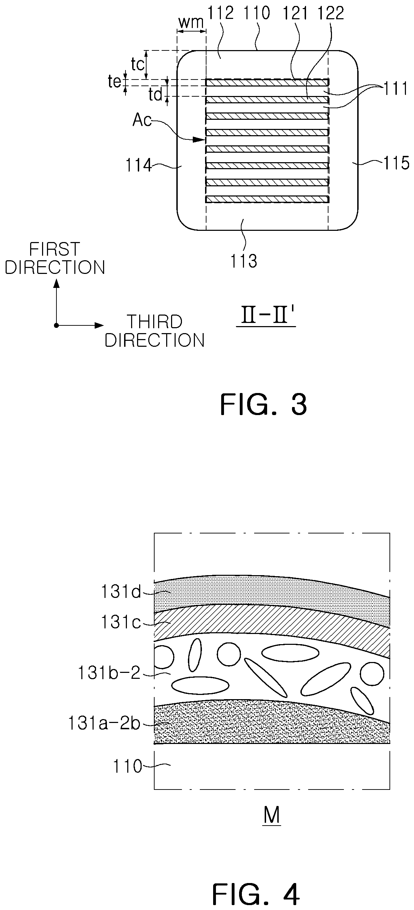

FIG. 3 schematically illustrates a cross-sectional view of FIG. 1, taken along line II-II'.

FIG. 4 schematically illustrates an enlarged view of portion M of FIG. 2.

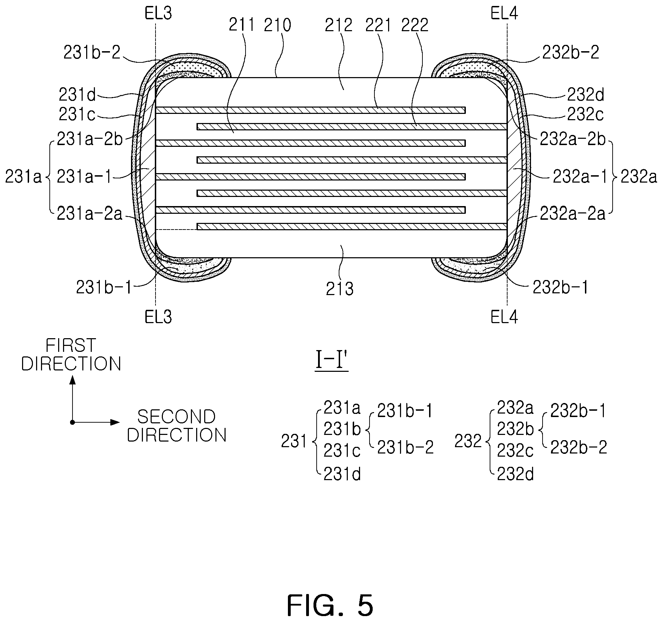

FIG. 5 schematically illustrates a cross-sectional view of a multilayer electronic component according to another embodiment of the present disclosure, corresponding to a cross-section of FIG. 1, taken along line I-I'.

Hereinafter, with reference to FIGS. 1 to 5, a multilayer electronic component according to an embodiment of the present disclosure will be described in detail. A multilayer ceramic capacitor will be described as an example of a multilayer electronic component, but the example embodiment may also be applied to various electronic products using a dielectric composition, such as an inductor, a piezoelectric element, a varistor, a thermistor, or the like.

A multilayer electronic component 100 according to an embodiment of the present disclosure may include a body 110 including a dielectric layer 111 and an internal electrode (121 and 122) alternately disposed with the dielectric layer 111 in a first direction, and including a first surface 1 and a second surface 2 opposing each other in the first direction, a third surface 3 and a fourth surface 4, connected to the first surface and the second surface 1 and 2 and opposing each other in a second direction, and a fifth surface 5 and a sixth surface 6, connected to the first surface, the second surface, the third surface, and the fourth surface 1 to 4 and opposing each other in a third direction; and an external electrode (131 and 132) including an electrode layer (131a and 132a) disposed on the body 110 and connected to the internal electrode (121 and 122), and a plating layer disposed on the electrode layer (131a and 132a), wherein the electrode layer (131a and 132a) includes a connection electrode layer (131a-1 and 132a-1) disposed on the third surface 3 and the fourth surface 4 and including copper (Cu) and glass, and a band electrode layer (131a-2 and 132a-2) contacting the connection electrode layer (131a-1 and 132a-1), disposed on a portion of the first surface 1 and a portion of the second surface 2, and including silver (Ag) and glass, and the external electrode (131 and 132) further includes a conductive resin layer (131b and 132b) disposed between the band electrode layer (131a-2 and 132a-2) and the plating layer and including a conductive metal and a resin.

The body 110 may have the dielectric layer 111 and the internal electrode (121 and 122), alternately stacked.

More specifically, the body 110 may include a first internal electrode 121 and a second internal electrode 122, disposed in the body 110 and alternately arranged to face each other, with the dielectric layer 111 therebetween, to include a capacitance forming portion Ac that forms capacitance.

Although the specific shape of the body 110 is not particularly limited, the body 110 may have a hexahedral shape or the like, as illustrated. Due to shrinkage of ceramic powder particles included in the body 110 during a sintering process, the body 110 may not have a perfectly straight hexahedral shape, but may have a substantially hexahedral shape.

The body 110 may include first and second surfaces 1 and 2 opposing each other in the first direction, third and fourth surfaces 3 and 4 connected to the first surface and the second surface 1 and 2 and opposing each other in the second direction, and fifth and sixth surfaces 5 and 6 connected to the first surface, the second surface, the third surface, and the fourth surface 1, 2, 3, and 4 and opposing each other in the third direction.

A plurality of dielectric layers 111 forming the body 110 may be in a sintered state, and a boundary between adjacent dielectric layers 111 may be integrated to such an extent that it may be difficult to identify the same without using a scanning electron microscope (SEM).

A raw material for forming the dielectric layer 111 is not particularly limited, as long as sufficient capacitance may be obtained therewith. In general, a perovskite (ABO₃)-based material may be used, for example, a barium titanate-based material, a lead composite perovskite-based material, a strontium titanate-based material, or the like may be used. The barium titanate-based material may include a BaTiO₃-based ceramic powder, and examples of the ceramic powder may include BaTiO₃, or (Ba₁₋ₓCaₓ)TiO₃(0<x<1), Ba(Ti_{1-y}Ca_{y})O₃(0<y<1), (Ba₁₋ₓCaₓ)(Ti_{1-y}Zr_{y})O₃(0<x<1, 0<y<1), Ba(Ti_{1-y}Zr_{y})O₃(0<y<1), or the like, in which calcium (Ca), zirconium (Zr), or the like is partially dissolved in BaTiO₃, or the like.

In addition, various ceramic additives, organic solvents, binders, dispersants, or the like may be added to the powder of barium titanate (BaTiO₃), and the like, as the raw material for forming the dielectric layer 111, according to the purpose of the present disclosure.

A thickness td of the dielectric layer 111 does not need to be particularly limited.

To achieve high capacitance of the multilayer electronic component, the thickness of the dielectric layer 111 may be 3.0 um or less. To more easily achieve miniaturization and high capacitance of the multilayer electronic component, the thickness of the dielectric layer 111 may be 0.6 um or less, more preferably 0.4 um or less.

In this case, the thickness td of the dielectric layer 111 may mean the thickness td of the dielectric layer 111 disposed between the first and second internal electrodes 121 and 122.

The thickness td of the dielectric layer 111 may mean a size of the dielectric layer 111 in the first direction. Also, the thickness td of the dielectric layer 111 may mean an average thickness td of the dielectric layer 111, and may mean an average size of the dielectric layer 111 in the first direction.

The average size of the dielectric layer 111 in the first direction may be measured by scanning images of cross-sections of the body 110 in the first and second directions with a scanning electron microscope (SEM) at a magnification of 10,000. More specifically, the average size of one dielectric layer 111 in the first direction means an average value calculated by measuring a size of one dielectric layer 111 in the second direction at thirty (30) equally spaced points in the scanned image in the first direction. The thirty (30) equally spaced points may be designated in the capacitance forming portion Ac. In addition, when such an average value is determined by extensively using measurements of average values to ten (10) dielectric layers 111, the average size of the dielectric layers 111 in the first direction may be further generalized.

The internal electrode (121 and 122) may be alternately stacked with the dielectric layer 111.

The internal electrode (121 and 122) may include the first internal electrode 121 and the second internal electrode 122, and the first and second internal electrodes 121 and 122 may be alternately disposed to oppose each other with the dielectric layers 111, constituting the body 110, interposed therebetween, and may be exposed from the third surface 3 and the fourth surface 4 of the body 110, respectively.

More specifically, the first internal electrode 121 may be spaced apart from the fourth surface 4, and may be exposed from the third surface 3, and the second internal electrode 122 may be spaced apart from the third surface 3, and may be exposed from the fourth surface 4. A first external electrode 131 may be disposed on the third surface 3 of the body 110 to be connected to the first internal electrode 121, and a second external electrode 132 may be disposed on the fourth surface 4 of the body 110 to be connected to the second internal electrode 122.

For example, the first internal electrode 121 may not be connected to the second external electrode 132, but may be connected to the first external electrode 131, and the second internal electrode 122 may not be connected to the first external electrode 131, but may be connected to the second external electrode 132. In this case, the first and second internal electrodes 121 and 122 may be electrically separated from each other by the dielectric layer 111 interposed therebetween.

The body 110 may be formed by alternately stacking a ceramic green sheet on which the first internal electrode 121 is printed and a ceramic green sheet on which the second internal electrode 122 is printed, and then sintering the stacked ceramic green sheets.

A material for forming the internal electrode (121 and 122) not particularly limited, and a material having excellent electrical conductivity may be used. For example, the internal electrode (121 and 122) may include at least one of nickel (Ni), copper (Cu), palladium (Pd), silver (Ag), gold (Au), platinum (Pt), tin (Sn), tungsten (W), titanium (Ti), or alloys thereof.

In addition, the internal electrode (121 and 122) may be formed by printing a conductive paste for the internal electrodes containing at least one of nickel (Ni), copper (Cu), palladium (Pd), silver (Ag), gold (Au), platinum (Pt), tin (Sn), tungsten (W), titanium (Ti), or alloys thereof, on the ceramic green sheets. As a printing method of the conductive paste for the internal electrodes, a screenprinting method, a gravure printing method, or the like may be used, but the present disclosure is not limited thereto.

A thickness te of the internal electrode (121 and 122) does not need to be particularly limited.

To achieve high capacitance of the multilayer electronic component, the thickness of the internal electrode (121 and 122) may be 1.0 um or less, and to more easily achieve miniaturization and high capacitance of the multilayer electronic component, the thickness of the internal electrode (121 and 122) may be 0.6 um or less, more preferably 0.4 um or less.

In this case, the thickness te of the internal electrode (121 and 122) may mean a size of the internal electrode (121 and 122) in the first direction. In addition, the thickness te of the internal electrode (121 and 122) may mean an average thickness te of the internal electrode (121 and 122), and may mean an average size of the internal electrode (121 and 122) in the first direction.

The average size of the internal electrode (121 and 122) in the first direction may be measured by scanning images of cross-sections of the body 110 in the first and second directions with a scanning electron microscope (SEM) at a magnification of 10,000. More specifically, the average size of one internal electrode in the first direction may be an average value calculated by measuring a size of one internal electrode in the second direction at thirty (30) equally spaced points in the scanned image. The thirty (30) equally spaced points may be designated in the capacitance forming portion Ac. In addition, when such an average value is determined by extensively using measurements of average values to ten (10) internal electrodes, the average size of the internal electrode in the first direction may be further generalized.

In an embodiment of the present disclosure, an average thickness td of at least one of the plurality of dielectric layers 111 and an average thickness te of at least one of the plurality of internal electrodes (121 and 122) may satisfy 2 × te < td.

For example, an average thickness td of one dielectric layer 111 may be greater than twice an average thickness te of one internal electrode (121 and 122). Preferably, the average thickness td of the plurality of dielectric layers 111 may be greater than twice the average thickness te of the plurality of internal electrodes (121 and 122).

In general, for high-voltage electronic components, a major issue may be reliability due to a decrease in breakdown voltage (BDV) in a high-voltage environment.

To prevent a decrease in breakdown voltage in a high voltage environment, the average thickness td of the dielectric layer 111 may be made to be greater than twice the average thickness te of the internal electrode (121 and 122). Therefore, a thickness of the dielectric layer, which may be a distance between the internal electrodes, may increase and breakdown voltage characteristics may be improved.

When the average thickness td of the dielectric layer 111 is less than twice the average thickness te of the internal electrode (121 and 122), an average thickness of the dielectric layer, which may be a distance between the internal electrodes, may be thin, to decrease breakdown voltage and occur a short circuit between internal electrodes.

In high-voltage electronic components, an average thickness te of the internal electrodes may be 1 um or less, and an average thickness td of the dielectric layers may be 3.0 µm or less, but the present disclosure is not necessarily limited thereto.

The body 110 may include cover portions 112 and 113 disposed on both end-surfaces of the capacitance forming portion Ac in the first direction.

Specifically, the cover portions 112 and 113 may include a first cover portion 112 disposed on one surface of the capacitance forming portion Ac in the first direction, and a second cover portion 113 disposed on the other surface of the capacitance forming portion Ac in the first direction. More specifically, the cover portions 112 and 113 may include an upper cover portion 112 disposed above the capacitance forming portion Ac in the first direction, and a lower cover portion 113 disposed below the capacitance forming portion Ac in the first direction.

The upper cover portion 112 and the lower cover portion 113 may be formed by stacking a single dielectric layer 111 or two or more dielectric layers 111 on upper and lower surfaces of the capacitance forming portion Ac in the first direction, respectively, and may basically play a role in preventing damage to the internal electrode (121 and 122) due to physical or chemical stress.

The upper cover portion 112 and the lower cover portion 113 may not include the internal electrode (121 and 122), and may include the same material as the dielectric layer 111. For example, the upper cover portion 112 and the lower cover portion 113 may include a ceramic material, and may include, for example, a barium titanate (BaTiO₃)-based ceramic material.

A thickness tc of each of the cover portions 112 and 113 does not need to be particularly limited.

To more easily achieve miniaturization and high capacitance of the multilayer electronic component, the thickness tc of each of the cover portions 112 and 113 may be 100 um or less, preferably 30 um or less, and, in case of ultra-small products, more preferably 20 um or less.

In this case, the thickness tc of each of the cover portions 112 and 113 may mean a size of each of the cover portions 112 and 113 in the first direction. In addition, the thickness tc of each of the cover portions 112 and 113 may mean an average thickness tc of each of the cover portions 112 and 113, and may mean a first direction average size of each of the cover portions 112 and 113.

The first direction average size of each of the cover portions 112 and 113 in the first direction may be measured by scanning images of cross-sections of the body 110 in the first and second directions with a scanning electron microscope (SEM) at a magnification of 10,000. More specifically, the first direction average size may be an average value calculated by measuring the size in the first direction at thirty (30) equally spaced points in the second direction in the scanned image of one cover portion.

In addition, the first direction average size of the cover portion measured by the above-described method may be substantially the same as the first direction average size of the cover portion, in cross-sections of the body 110 in the first and third directions.

The multilayer electronic component 100 may include side margin portions 114 and 115 disposed on both end-surfaces of the body 110 in the third direction.

Specifically, the side margin portions 114 and 115 may include a first margin portion 114 disposed on one surface of the body 110 in the third direction and a second margin portion 115 disposed on the other surface of the body 110 in the third direction, and more specifically, may include the first margin portion 114 disposed on the fifth surface 5 of the body 110 and the second margin portion 115 disposed on the sixth surface 6 of the body 110.

As illustrated, the side margin portions 114 and 115 may refer to regions between both end-surfaces of the first and second internal electrodes 121 and 122 in the third direction and a boundary surface of the body 110, in a cross-section of the body 110 cut in the first and third directions.

The side margin portions 114 and 115 may be prepared by applying a conductive paste on a ceramic green sheet to form the internal electrode (121 and 122), except for a portion in which the side margin portions 114 and 115 are formed, and, to suppress a step difference due to the internal electrode (121 and 122), cutting the internal electrode (121 and 122) to expose the fifth and sixth surfaces 5 and 6 of the body 110, and then stacking a single dielectric layer 111 or two or more dielectric layers 111 in the third direction on both end-surfaces of the capacitance forming portion Ac in the third direction.

The side margin portions 114 and 115 may basically play a role in preventing damage to the internal electrode (121 and 122) due to physical or chemical stress.

The first side margin portion 114 and the second side margin portion 115 may not include the internal electrode (121 and 122), and may include the same material as the dielectric layer 111. For example, the first side margin portion 114 and the second side margin portion 115 may include a ceramic material, and may include, for example, a barium titanate (BaTiO₃)-based ceramic material.

A width wm of each of the first and second side margin portions 114 and 115 does not need to be particularly limited.

To more easily achieve miniaturization and high capacitance of the multilayer electronic component 100, the width wm of the side margin portion (114 and 115) may be 100 um or less, and preferably 30 um or less, and, in case of ultra-small products, more preferably 20 um or less.

In this case, the width wm of the side margin portion (114 and 115) may mean a size of each of the side margin portion (114 and 115) in the third direction. Also, the width wm of the side margin portion (114 and 115) may mean an average width wm of the side margin portion (114 and 115), and may mean a third direction average size of the side margin portion (114 and 115).

The third direction average size of the side margin portion (114 and 115) may be measured by scanning images of cross-sections of the body 110 in the first and third directions with a scanning electron microscope (SEM) at a magnification of 10,000. More specifically, the third direction average size may refer to an average value calculated by measuring sizes in the third direction at ten (10) equally spaced points in the first direction in a scanned image of one side margin portion.

In an embodiment of the present disclosure, a structure in which the multilayer electronic component 100 has two external electrodes 131 and 132 are illustrated, but the number, shapes, or the like of external electrodes 131 and 132 may be changed, depending on a shape of internal electrodes 121 and 122, or other purposes.

The external electrode (131 and 132) may be disposed on the body 110, and may be connected to the internal electrode (121 and 122).

More specifically, the external electrodes 131 and 132 may include first and second external electrodes 131 and 132 disposed on the third surface 3 and the fourth surface 4 of the body 110, respectively, and connected to the first and second internal electrodes 121 and 122, respectively. For example, the first external electrode 131 may be disposed on the third surface 3 of the body, and may be connected to the first internal electrode 121, and the second external electrode 132 may be disposed on the fourth surface 4 of the body, and may be connected to the second internal electrode 122.

Additionally, the external electrode (131 and 132) may be disposed to extend on portions of the first surface and the second surface 1 and 2 of the body 110, or may be disposed to extend on portions of the fifth and sixth surfaces 5 and 6 of the body 110. For example, the first external electrode 131 may be disposed on portions of the first, second, fifth, and sixth surfaces 1, 2, 5, and 6 of the body 110, and on the third surface 3 of the body 110, and the second external electrode 132 may be disposed on portions of the first, second, fifth, and sixth surfaces 1, 2, 5, and 6 of the body 110, and on the third surface 3 of the body 110. In this case, the first and second external electrodes 131 and 132 may be spaced apart from each other.

The external electrode (131 and 132) may be formed of any material as long as they have electrical conductivity, such as metal or the like, and a specific material may be determined in consideration of electrical characteristics, structural stability, or the like, and may further have a multilayer structure.

In an embodiment of the present disclosure, an external electrode (131 and 132) may include an electrode layer (131a and 132a) connected to an internal electrode (121 and 122) and disposed on a body 110, and a plating layer (131c, 132c, 131d, and 132d) disposed on the electrode layer (131a and 132a) The electrode layer (131a and 132a) may include a connection electrode layer (131a-1 and 132a-1) disposed on third and fourth surfaces 3 and 4 and including a first conductive metal and first glass, and a band electrode layer (131a-2 and 132a-2) contacting the connection electrode layer (131a-1 and 132a-1), disposed on a portion of a first surface 1 and a portion of a second surface 2, and including a second conductive metal and second glass.

In this case, the external electrode (131 and 132) may further include a conductive resin layer (131b and 132b) disposed between the band electrode layer (131a-2 and 132a-2) and the plating layer (131c and 132c) and including a third conductive metal and a resin.

The multilayer electronic component 100 may include a structure of the external electrode (131 and 132) described above to improve bending strength characteristics and moisture resistance reliability at the same time.

The external electrode (131 and 132) may include an electrode layer (131a and 132a) connected to an internal electrode (121 and 122) and disposed on the body 110. In this case, the electrode layer (131a and 132a) include a connection electrode layer (131a-1 and 132a-1) disposed in a connection portion on the third surface 3 and the fourth surface 4, and a band electrode layer (131a-2 and 132a-2) contacting the connection electrode layer (131a-1 and 132a-1), disposed in a band portion on a portion of a first surface 1 and a portion of a second surface 2.

More specifically, a first external electrode 131 may be connected to a first internal electrode 121, and may include an electrode layer 131a disposed on the body 110. In this case, the electrode layer 131a may include a connection electrode layer 131a-1 disposed on the third surface 3, and a band electrode layer 131a-2 contacting the connection electrode layer 131a-1 and disposed on a portion of the first surface 1 and a portion of the second surface 2. In this case, the band electrode layer 131a-2 may include a first band electrode layer 131a-2a disposed on a portion of the first surface 1 of the body, and a second band electrode layer 131a-2b disposed on a portion of the second surface 2 of the body.

A second external electrode 132 may be connected to a second internal electrode 122, and may include an electrode layer 132a disposed on the body 110. In this case, the electrode layer 132a may include a connection electrode layer 132a-1 disposed on the fourth surface 4, and a band electrode layer 132a-2 contacting the connection electrode layer 132a-1 and disposed on a portion of the first surface 1 and a portion of the second surface 2. In this case, the band electrode layer 132a-2 may include a first band electrode layer 132a-2a disposed on a portion of the first surface 1 of the body, and a second band electrode layer 132a-2b disposed on a portion of the second surface 2 of the body.

The connection electrode layer (131a-1 and 132a-1) may include a first conductive metal and first glass.

The first conductive metal may include, for example, copper (Cu), but the present disclosure is not particularly limited thereto, and may not be particularly limited as long as it is a material that may be electrically connected to the internal electrode (121 and 122). A material, which may be the first conductive metal, may include at least one selected from the group consisting of copper (Cu), nickel (Ni), palladium (Pd), silver (Ag), gold (Au), platinum (Pt), tin (Sn), tungsten (W), titanium (Ti), and alloys thereof, and any material having excellent electrical conductivity may be used.

In addition, the first glass may play a role in improving adhesion to the body 110, and the connection electrode layer (131a-1 and 132a-1) may include the first glass to have excellent adhesion to the body 110. In this case, the first glass may be a concept including a glass frit.

The connection electrode layer (131a-1 and 132a-1) may be formed by applying a conductive paste including first glass to a first conductive metal, and then sintering the conductive paste.

The band electrode layer (131a-2 and 132b-2) may include a second conductive metal and second glass.

The second conductive metal may include, for example, silver (Ag), but the present disclosure is not particularly limited thereto, and may not be particularly limited as long as it is a material that may be electrically connected to the connection electrode layer (131a-1 and 132a-1) and the internal electrode (121 and 122). A material, which may be the second conductive metal, may include copper (Cu), nickel (Ni), palladium (Pd), silver (Ag), gold (Au), platinum (Pt), tin (Sn), tungsten (W), titanium (Ti), and alloys thereof, and any material having excellent electrical conductivity may be used.

The band electrode layer (131a-2 and 132a-2) may include a conductive metal, softer than a conductive metal included in the connection electrode layer (131a-1 and 132a-1), for example, silver (Ag). Therefore, the multilayer electronic component 100 may absorb bending stress applied thereto to suppress occurrence of cracks. The softness of the metal may be determined by a hardness tester. Other methods and/or tools appreciated by one of ordinary skill in the art, even if not described in the present disclosure, may also be used.

In addition, the second glass may serve to improve adhesion to the body 110, and the band electrode layer (131a-2 and 132a-2) may include the second glass to have excellent adhesion to the body 110. In this case, the second glass may be a concept including a glass frit.

The band electrode layer (131a-2 and 132a-2) may be formed by applying a conductive paste including the second glass and the second conductive metal, and then sintering the conductive paste.

The first glass and the second glass may be the same as or different from each other, and when they include a plurality of glass types, at least one of the plurality of glass types may be the same material, but the present disclosure is not particularly limited thereto.

A method of forming the connection electrode layer (131a-1 and 132a-1) and the band electrode layer (131a-2 and 132a-2) is not particularly limited. For example, the electrode layer (131a and 132a) may be formed by applying the connection electrode layer (131a-1 and 132a-1) first, applying the band electrode layer (131a-2 and 132a-2) later, and then sintering them. The electrode layer (131a and 132a) may be formed by applying the band electrode layer (131a-2 and 132a-2) first, applying the connection electrode layer (131a-1 and 132a-1) later, and then sintering them. The connection or band electrode layer may be first applied, the connection or connection electrode layer may be removed by a polishing process such as sand blasting, in a region to which the band or connection electrode layer is to be applied, and then the band or connection electrode layer may be applied.

In an embodiment of the present disclosure, a band electrode layer (131a-2 and 132a-2) may not be disposed between an extension line EL1 of the first surface and an extension line EL2 of the second surface.

For a more specific example with reference to FIG. 2, a first band electrode layer 131a-2a of the first external electrode 131 may only be disposed below EL1 and may not be disposed above EL1, and a second band electrode layers 131a-2b of the first external electrode 131 may only be disposed above EL2 and may not be disposed below EL2. For example, the band electrode layers 131a-2a and 131a-2b of the first external electrode may not be disposed between EL1 and EL2 in the first direction, or may not be disposed on the third surface 3.

A first band electrode layer 132a-2a of the second external electrode 132 may be disposed only below EL1 and may not be disposed above EL1, and a second band electrode layer 132a-2b of the second external electrode 132 may be disposed only above EL2 and may not be disposed below EL2. For example, the band electrode layers 132a-2a and 132a-2b of the second external electrode may not be disposed between EL1 and EL2 in the first direction, or may not be disposed on the fourth surface 4.

Therefore, the band electrode layer (131a-2 and 132a-2) may not be disposed between EL1 and EL2 or may not be disposed on the third surface 3 and the fourth surface 4.

In another embodiment of the present disclosure, a band electrode layer (231a-2 and 232a-2) may be disposed between an extension line EL3 of the third surface 3 and an extension line EL4 of the fourth surface 4.

For a more specific example with reference to FIG. 5, a first band electrode layer 231a-2a of the first external electrode 231 may be disposed only on a right side of EL3 and may not be disposed on a left side of EL3, and a second band electrode layer 231a-2b of the first external electrode 231 may be disposed only on the right side of EL3 and may not be disposed on the left side of EL3. For example, the band electrode layers 231a-2a and 231a-2b of the first external electrode 231 may be disposed on the right side of EL3 or may not be disposed on the third surface 3.

A first band electrode layer 232a-2a of the second external electrode 232 may be disposed only on a left side of EL4 and may not be disposed on a right side of EL4, and a second band electrode layer 232a-2b of the second external electrode 232 may be disposed only on the left side of EL4 and may not be disposed on the right side of EL4. For example, the band electrode layers 232a-2a and 232a-2b of the second external electrode may be disposed on the left side of EL4 or may not be disposed on the fourth surface 4.

Therefore, the band electrode layers 231a-2 and 232a-2 may be disposed between EL3 and EL4.

The plating layer (131c, 132c, 131d, and 132d) may serve to improve mounting characteristics.

The plating layer (131c, 132c, 131d, and 132d) is not particularly limited in terms of a type thereof, and may be formed as a single plating layer (131c and 132c) and a plurality of plating layers (131c, 132c, 131d, and 132d) .

For example, the plating layers (131c, 132c, 131d, and 132d) may include a first plating layer (131c and 132c) disposed on the electrode layer (131a and 132a), and a second plating layer (131d and 132d) disposed on the first plating layer (131c and 132c) .

For a more specific example of the plating layer (131c, 132c, 131d, and 132d), the drawings illustrate two plating layers, but the present disclosure is not limited thereto, and one plating layer or two or more plating layers may be included, as needed.

The plating layer (131c, 132c, 131d, and 132d) may be at least one of a nickel (Ni) plating layer or a tin (Sn) plating layer. On the electrode layer (131a and 132a), the Ni plating layer and the Sn plating layer may be formed sequentially, and the Sn plating layer, the Ni plating layer, and the Sn plating layer may be formed sequentially. Additionally, the plating layer may include a plurality of Ni plating layers and/or a plurality of Sn plating layers.

In an embodiment of the present disclosure, the external electrode (131 and 132) may further include a conductive resin layer (131b and 132b) disposed between the band electrode layer (131a-2 and 132a-2) and the first plating layer (131c and 132c), and including a third conductive metal and a resin.

The third conductive metal may include, for example, copper (Cu), but the present disclosure is not particularly limited thereto, and may not be particularly limited as long as it is a material that may be electrically connected to the internal electrode (121 and 122) or the electrode layer (131a and 132a). A material, which may be the third conductive metal, may include copper (Cu), nickel (Ni), palladium (Pd), silver (Ag), gold (Au), platinum (Pt), tin (Sn), tungsten (W), titanium (Ti), and alloys thereof, and any material having excellent electrical conductivity may be used.

In this case, the third conductive metal may include at least one of a spherical particle or a flake-shaped particle. For example, the third conductive metal may include only flake-shaped particles, may include only spherical particles, or may be a mixture of flake-shaped particles and spherical particles. In this case, the spherical particle may also include a shape that may not be completely spherical, for example, a shape in which a length ratio of a major axis and a minor axis (major axis/minor axis) is 1.45 or less. The flake-type particle refers to a particle having a flat and elongated shape, and is not particularly limited, but for example, a length ratio of a major axis and a minor axis (major axis/minor axis) may be 1.95 or more. Lengths of the major and minor axes of the spherical particle and the flake-shaped particle may be measured from images obtained by scanning cross-sections in the first and second directions cut from a central portion of the multilayer electronic component in the third direction with a scanning electron microscope (SEM).

Additionally, the third conductive metal may include an intermetallic compound. The intermetallic compound may be included to further improve electrical connectivity with the electrode layer (131a and 132a). The intermetallic compound may serve to improve electrical connectivity by connecting a plurality of metal particles, and may serve to surround and connect the plurality of metal particles to each other.

In this case, the intermetallic compound may include a metal having a melting point, lower than a curing temperature of a resin. For example, since the intermetallic compound includes a metal having a melting point, lower than a curing temperature of a resin, the metal having a melting point, lower than a curing temperature of a resin, may melt during a drying process and a curing process to form some of metal particles and the intermetallic compound, to surround the metal particles.

The intermetallic compound may include a low melting point metal of 300°C or lower. For example, the intermetallic compound may include tin (Sn) having a melting point of 213 to 220°C. During the drying process and the curing process, Sn may be melted, and the melted Sn may wet the third conductive metal particles having a high melting point, such as Ag, Ni, or Cu, by capillary action, and may react with a portion of Ag, Ni, or Cu metal particles to form intermetallic compounds such as Ag₃Sn, Ni₃Sn₄, Cu₆Sn₅, Cu₃Sn, or the like. Ag, Ni, or Cu that did not participate in the reaction may remain as metal particles.

Therefore, the plurality of metal particles may include one or more of Ag, Ni, and Cu, and the intermetallic compound may include one or more of Ag₃Sn, Ni₃Sn₄, Cu₆Sn₅, or Cu₃Sn.

The resin may include a thermosetting resin having electrical insulating properties. For example, the resin may include an epoxy resin, but the present disclosure is not particularly limited thereto, and may include a bisphenol A resin, a glycol epoxy resin, a novolac epoxy resin, or a resin having a low molecular weight and provided as a liquid at room temperature, among derivatives thereof. However, the present disclosure is not particularly limited thereto.

The conductive resin layer (131b and 132b) may improve bending strength characteristics and moisture resistance reliability of the multilayer electronic component 100.

More specifically, the conductive resin layer (131b and 132b) absorb tensile stress generated in a mechanical or thermal environment when mounting the multilayer electronic component 100 on a substrate to prevent cracks from occurring. In addition, the plurality of materials included in the conductive resin layer (131b and 132b) may effectively suppress external moisture penetration, thereby improving moisture resistance reliability.

In the present disclosure, the first conductive metal, the second conductive metal, and the third conductive metal may be the same as or different from each other, or two of the three conductive metals may be the same material. Additionally, each of the conductive metals may include a plurality of materials, and at least one of the plurality of materials may be the same material, but the present disclosure is not particularly limited thereto.

The conductive resin layer (131b and 132b) may be disposed between the band electrode layer (131a-2 and 132a-2) and the first plating layer (131c and 132c).

For example, in an embodiment of the present disclosure, the conductive resin layer (131b and 132b) may not be disposed between the extension line EL1 on the first surface 1 and the extension line EL2 on the second surface 2.

For a more specific example with reference to FIG. 2, a first conductive resin layer 131b-1 of the first external electrode 131 may be disposed only below EL1 and may not be disposed above EL1, and a second conductive resin layer 131b-2 of the first external electrode 131 may be disposed only above EL2 and may not be disposed below EL2. For example, the conductive resin layers 131b-1 and 131b-2 of the first external electrode may not be disposed between EL1 and EL2 in the first direction, or may not be disposed on the third surface 3.

A first conductive resin layer 132b-1 of the second external electrode 132 may be disposed only below EL1 and may not be disposed above EL1, and a second conductive resin layer 132b-2 of the second external electrode 132 may be disposed only above EL2 and may not be disposed below EL2. For example, the conductive resin layers 132b-1 and 132b-2 of the second external electrode may not be disposed between EL1 and EL2 in the first direction, or may not be disposed on the fourth surface 4.

Therefore, the conductive resin layer (131b and 132b) may not be disposed between EL1 and EL2 and may not be disposed on the third surface 3 and the fourth surface 4.

In another embodiment of the present disclosure, a conductive resin layer (231b and 232b) may be disposed between an extension line EL3 of the third surface and an extension line EL4 of the fourth surface.

For a more specific example with reference to FIG. 5, a first conductive resin layer 231b-1 of the first external electrode 231 may be disposed only on a right side of EL3 and may not be disposed on a left side of EL3, and a second conductive resin layer 231b-1b of the first external electrode 231 may be disposed only on the right side of EL3 and may not be disposed on the left side of EL3. For example, the band electrode layers 231b-1 and 231b-1 of the first external electrode 231 may be disposed on the right side of EL3 or may not be disposed on the third surface 3.

A first conductive resin layer 232b-1 of the second external electrode 232 may be disposed only on a left side of EL4 and may not be disposed on a right side of EL4, and a second conductive resin layer 232b-2 of the second external electrode 232 may be disposed only on the left side of EL4 and may not be disposed on the right side of EL4. For example, the band electrode layers 232b-1 and 232b-2 of the second external electrode 232 may be disposed on the left side of EL4 or may not be disposed on the fourth surface 4.

Therefore, the conductive resin layers 231b and 232b may be disposed between EL3 and EL4.

In an embodiment of the present disclosure, the conductive resin layer (131b and 132b) may not be in contact with the connection electrode layer (131a-1 and 132a-1). In an embodiment of the present disclosure, the conductive resin layer (131b and 132b) may not be in direct contact with the connection electrode layer (131a-1 and 132a-1).

As the conductive resin layer (131b and 132b) may not be in contact with the connection electrode layer (131a-1 and 132a-1), bending strength characteristics of the multilayer electronic component 100 may be improved, and a structure according to a manufacturing process is easy to be designed.

Additionally, in an embodiment of the present disclosure, the first plating layer (131c and 132c) may not be in contact with the band electrode layer (131a-2 and 132a-2). In an embodiment of the present disclosure, the first plating layer (131c and 132c) may not be in direct contact with the band electrode layer (131a-2 and 132a-2).

The first plating layer (131c and 132c) may not be in contact with the band electrode layer (131a-2 and 132a-2), to prevent a plating solution from penetrating into a body during a plating process, thereby improving moisture resistance reliability and suppressing deterioration of the internal electrodes.

There is no need to specifically limit a size of the multilayer electronic component 100.

To simultaneously achieve miniaturization and high capacitance, since thicknesses of a dielectric layer and an internal electrode should be thinned to increase the number of stacks, a multilayer electronic component 100 having a size of 1005 (length × width: 1.0 mm × 0.5 mm) or less may have more noticeable effects according to the present disclosure.

In addition, the expression 'an embodiment' used in this specification does not mean the same embodiment, and may be provided to emphasize and describe different unique characteristics. However, an embodiment presented above may not be excluded from being implemented in combination with features of another embodiment. For example, although the description in a specific embodiment is not described in another example, it may be understood as an explanation related to another example, unless otherwise described or contradicted by the other embodiment.

The terms used in this disclosure are used only to illustrate various examples and are not intended to limit the present inventive concept. Singular expressions include plural expressions unless the context clearly dictates otherwise.

One of many effects of the present disclosure is to improve bending strength characteristics of a multilayer electronic component.

One of many effects of the present disclosure is to improve moisture resistance reliability of a multilayer electronic component.

However, various advantages and effects of the present disclosure are not limited to the above-described contents, and may be more easily understood in a process of explaining specific embodiments of the present disclosure.

While example embodiments have been illustrated and described above, it will be apparent to those skilled in the art that modifications and variations could be made without departing from the scope of the present disclosure as defined by the appended claims.

## Claims

1. A multilayer electronic component (100) comprising:
a body (110) including dielectric layers (111) and internal electrodes (121, 122) alternately disposed with the dielectric layer (111) in a first direction, the body (110) including a first surface (1) and a second surface (2) opposing each other in the first direction, a third surface (3) and a fourth surface (4) opposing each other in a second direction and connected to the first surface (1) and the second surface (2), and a fifth surface (5) and a sixth surface (6) opposing each other in a third direction and connected to the first surface (1), the second surface (2), the third surface (3), and the fourth surface (4); and
external electrodes (131, 132) including an electrode layer (131a, 132a) disposed on the body (110) and connected to the internal electrodes (121, 122), a plating layer (131c, 132c) disposed on the electrode layer (131a, 132a), and a conductive resin layer (131b, 132b) including a conductive metal and a resin,
wherein the electrode layer (131a, 132a) includes a connection electrode layer (131a-1, 132a-1) disposed on the third surface (3) and the fourth surface (4) and including copper (Cu) and a first glass, and a band electrode layer (131a-2, 132a-2) contacting the connection electrode layer (131a-1, 132a-1), disposed on a portion of the first surface (1) and a portion of the second surface (2), and including silver (Ag) and a second glass, and
the conductive resin layer (131b, 132b) is disposed between the band electrode layer (131a-2, 132a-2) and the plating layer (131c, 132c).

2. The multilayer electronic component (100) of claim 1, wherein the conductive metal comprises copper (Cu).

3. The multilayer electronic component (100) of claim 1, wherein the conductive metal comprises an intermetallic compound.

4. The multilayer electronic component (100) of claim 1, wherein the band electrode layer (131a-2, 132a-2) is not disposed between an extension line (EL1) of the first surface and an extension line (EL2) of the second surface.

5. The multilayer electronic component (100) of claim 1, wherein the conductive resin layer (131b, 132b) is not disposed between an extension line (EL1) of the first surface and an extension line (EL2) of the second surface.

6. The multilayer electronic component (100) of claim 1, wherein the band electrode layer (131a-2, 132a-2) is disposed between an extension line (EL3) of the third surface and an extension line (EL4) of the fourth surface.

7. The multilayer electronic component (100) of claim 1, wherein the conductive resin layer (131b, 132b) is disposed between an extension line (EL3) of the third surface and an extension line (EL4) of the fourth surface.

8. The multilayer electronic component (100) of claim 1, wherein the conductive resin layer (131a, 132b) is not in direct contact with the connection electrode layer (131a-1, 132a-1).

9. The multilayer electronic component (100) of claim 1, wherein the plating layer (131c, 132c) is not in direct contact with the band electrode layer (131a-2, 132a-2) .

10. The multilayer electronic component (100) of claim 1, wherein the plating layer comprises a first plating layer (131c, 132c) disposed on the connection electrode layer (131a-1, 132a-1) and the conductive resin layer (131b, 132b), and a second plating layer (131d, 132d) disposed on the first plating layer (131c, 132c).

11. The multilayer electronic component (100) of claim 1, wherein the resin includes an epoxy resin.

12. The multilayer electronic component (100) of claim 1, wherein the second glass includes a glass frit.
